# EUROPEAN PATENT SPECIFICATION

(11) **EP 0 499 449 B1**
(45) Date of publication and mention of the grant of the patent: **16.04.1997**
(21) Application number: 92301138.1
(22) Date of filing: 11.02.1992
(51) Int. Cl.: H01H 13/14, H01H 3/12

(54) **Key switch**
Tastschalter
Commutateur à bouton-poussoir

(30) Priority: 12.02.1991 JP 12080/91
(43) Date of publication of application: 19.08.1992
(73) Proprietor: MINEBEA CO.,LTD., Kitasaku-gun Nagano-ken (JP)
(72) Inventor: Osada, Masamitsu, Kawasaki-shi, Kanagawa (JP); Takahashi, Nobuyuki, Yokohama-shi, Kanagawa (JP)
(74) Representative: Jackson, Peter Arthur

(56) References cited:
- EP-A- 0 091 284
- EP-A- 0 100 936
- DE-A- 3 414 909
- US-A- 4 454 562
- PATENT ABSTRACTS OF JAPAN vol. 015, no. 299 (E-1095)30 July 1991 & JP-A-3 108218 ( FUJITSU ) 8 May 1991
- PATENT ABSTRACTS OF JAPAN vol. 015, no. 454 (E-1135)19 November 1991 & JP-A-3 194 811 ( ALPS ELECTRIC CO ) 26 August 1991

## Description

This invention relates to a key switch. More particular, the invention relates to a key switch suited for use as a data input key for a computer or word processor.

Many key switches are used in the data input keyboards of computers, word processors and the like. Furthermore, as these electronic devices become more compact, there is increasing demand for the manufacture of thinner, more compact keyboards.

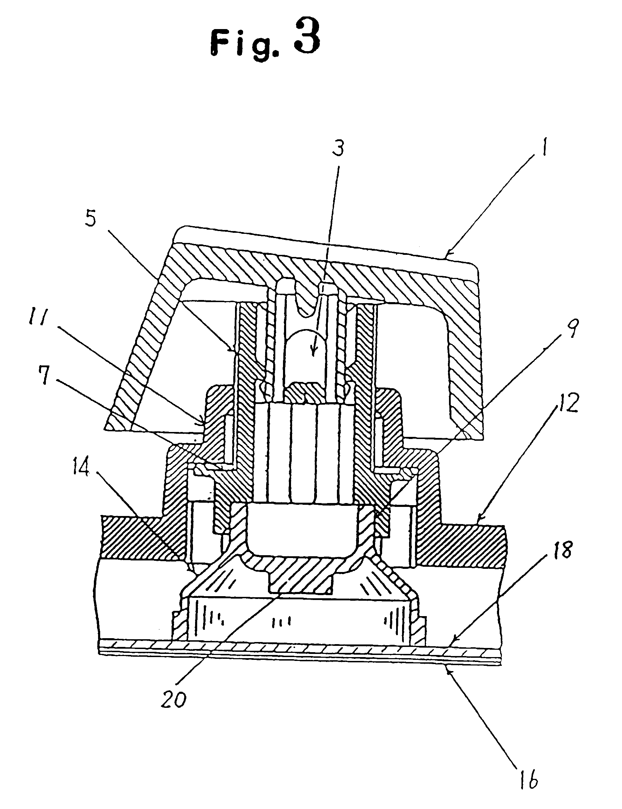

Figure 3 illustrates a cross-sectional view of a key switch comprising the features of the preamble of claim 1 incorporated in a keyboard for conventional compact electronic device.

In Figure 3, numeral 1 denotes a keytop, on the upper face of which lettering has been printed or embossed. The keytop 1 is in the form of a cube, the underside of which is open, forming a cavity. A connector 3 is molded so as to protrude down from the middle of the inner cavity of the keytop 1. The connector 3 fits into a cylindrical keystem 5. A concave area 9 is formed inside the bottom end of the key stem 5, and a regulating ledge 7 is formed around its periphery. A frame 11 is disposed about the key stem 5. The frame 11 is molded together with the keyboard base 12 to form a single unit of synthetic resin. The portion formed around the key switch protrudes from the base and in cross-section has the from of a two-step platform. The key stem 5 is guided on its periphery by a circular opening at the upper end of the frame 11 such that the regulating ledge 7 at the bottom end of the key stem is brought into contact with the middle ledge of the frame 11. The concave area 9 of the keystem 5 fits over the head of a cup-shaped rubber spring 14 consisting of an elastic material such as rubber. The underside of the rubber spring 14 is in light contact with a backplate 16, which consists of a steel plate or other like hard, plate-like object. A laminar switch 18, which is in the form of a thin film, is formed on the surface of the backplate 16, i.e., on the portion with which the underside of the rubber spring 14 is in contact. The laminar switch 18 is constructed as follows; two pliable synthetic resin sheets, on the opposing faces of which electrodes, are placed facing each other with a small space between them in such a manner that the electric contact points are brought into contact as the synthetic resin sheets are pressed together by a protrusion 20 provided on the underside of the backplate 16. As such switches are already well known, a detailed explanation shall be omitted.

In the case of a conventional key switch with a construction such as that described, when the top of the key top 1 is pressed down by the finger, the keystem 5, which is attached to the underside of the keytop 1, is guided by the round opening at the top of the frame 11 so that its bottom end depresses the rubber spring 14, causing it to collapse and the protrusion 20 inside it to press down on the laminar switch 18, thereby activating the key switch.

In the case of a key switch of this type, the rubber spring 14, the upper end of which is pressed down by the frame 11, is gradually deformed until it suddenly collapses at the time that a certain deformation threshold is exceeded. The operator experiences the impact at this time as a clicking sensation at the fingertips and gains a sense of how the key switch is operating. Though the more distinct the clicking sensation the better, obtaining such a distinct clicking sensation requires a design which provides a large keystroke distance for the rubber spring 14. This allows the distance through which the protrusion 20 on the rubber spring 14 moves, from its uppermost position to the point at which it activates the laminar switch 18, to be as great as possible. For this reason, the conventional key switch shown in Figure 3 requires use of a key stem 5 which is long enough to allow use of a rubber spring 14 with a keystroke distance of some length. It is therefore also necessary for the height of the frame 11 supporting the keystem 5 to be correspondingly high.

With the rapid advances of portable computers, word processors and the like in recent years, there has been an attempt to make these devices thinner and more compact which has lead to a demand for thinner keyboards as well. Nevertheless, there is an even stronger demand, contradictory to the above, for use of a keyboard with favorable operating properties in which maintains the long keystroke distance of conventional key switches for keyboards is maintained.

An object of the present invention is to provide a key switch in which the thickness of the key switch is made as thin as possible while maintaining a long keystroke distance for the key.

According to the present invention, a key switch comprising a base plate including an electric contact mechanism; a fixed guide cylinder on the base plate; a keytop having a neck which is slidable relatively to the guide cylinder; an elastic body pushing up the keytop to the upper limit from the base plate, and arranged to activate the electric contact mechanism by being suddenly collapsed by pressure of the keytop after a prescribed keystroke distance, and pushing up the keytop to deactivate the electric contact mechanism on removal of the pressure (as shown in Figure 3) is characterised by an intermediate guide cylinder, which is free to slide lengthwise inside the fixed guide cylinder, and in which the neck is slidable during an initial part of the keystroke, whereafter, during the remainder of the keystroke, the intermediate guide cylinder is carried along with the keytop and both the keytop neck and intermediate guide cylinder engage the elastic body to cause collapse thereof.

As the keytop is depressed, its neck descends, guided by the intermediate guide cylinder, until it begins to compress the elastic body. The keytop next comes in contact with the intermediate guide cylinder and pushes it down until the elastic body suddenly collapses under the pressure of the keytop neck and intermediate guide cylinder and impinges upon the electrical contact points. On removal of pressure from the keytop, the keytop, intermediate guide cylinder and elastic body are restored to their original positions by the elastic force of the elastic body.

US-A-4467160 discloses a key switch in which a keytop is guided in an intermediate guide but this guide has no spring-collapsing function.

In the accompanying drawings:

Figure 1 is a cross-sectional view of a practical embodiment of the present invention.

Figure 2 is a cross-sectional view for describing of the operation of the practical example of the present invention.

Figure 3 is a cross-sectional view of a conventional example.

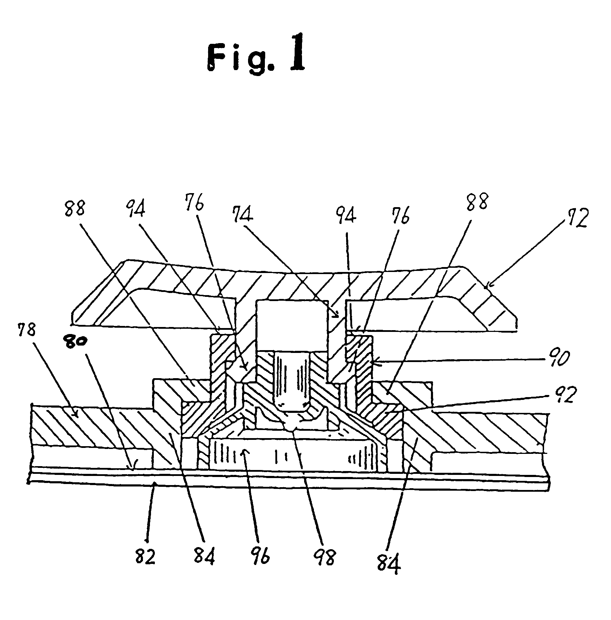

As illustrated in Fig.1, a key switch embodying the present invention includes a keytop 72, on the surface of which, needless to say, are displayed lettering, symbols or numbers by any of various methods. A neck 74, which is in the form of a hollow cylinder, protrudes down from the middle of the underside of the keytop 72. A locking ledge 76 is formed on the periphery of the bottom end of the neck 74. Numeral 78 denotes a base formed on the surface of the keyboard and molded of synthetic resin in the conventional manner. A backplate 82 is positioned a fixed distance below the base 78. A laminar switch 80, which is of a conventional type, is made to adhere to the upper surface of the backplate. One part of the base 78 is molded in a cylindrical shape to form a guide cylinder 84 The bottom end of the guide cylinder 84 reaches down as far as the laminar switch 80; obviously, no contact points for the switch are formed in this portion. A stopper 88, which is bent inward, is formed on the upper end of the guide cylinder 84.

Numeral 90 denotes an intermediate guide cylinder. The intermediate guide cylinder 90 has a locking ledge 92 on the periphery of its bottom end, and a locking flange 94 which protrudes inwardly at its upper end. As apparent from Figure 1, the intermediate guide cylinder 90 is inserted through and free to slide back and forth in a hole formed at the upper end of the guide cylinder 84, and the locking ledge 92, established at its bottom end, is locked into the stopper 88 on the guide cylinder 84. The neck 74 fixed to the underside of the keytop 72 is inserted through the upper end of the intermediate guide cylinder 90 in such a manner that it is free to slide back and forth, and the locking ledge 76 at its bottom end is locked into the locking flange 94 of the intermediate guide cylinder 90. The bottom end of the locking ledge 76 is so tapered that the neck 74 readily fits into the intermediate guide cylinder 90 when the locking ledge 76 is pressed down hard into the intermediate guide cylinder 90 at the time of assembly. The action of the tapered portion, which is capable of deforming slightly due to the resilience of the synthetic resin constituting the keytop 72, makes this possible. Numeral 96 denotes a rubber spring. The upper end of the rubber spring 96 fits into the bottom end of the neck 74, and its underside is placed on the upper surface of the laminar switch 80. Numeral 98 denotes an activator node provided on the rubber spring 96.

As apparent from Figure 1, the guide cylinder 90, intermediate guide cylinder 84 and neck 74 of the keytop 72 form a spigot joint type structure and behave in the manner of a telescoping fishing rod at the time of extension and contraction.

The operation of a practical example of the present invention is described next.

In the state depicted in Figure 1, the neck 74 is held up by the elastic force of the rubber spring 96. The locking ledge 76 thus locks into and pushes up the locking flange 94, and with it, the intermediate guide cylinder 90, such that the locking ledge 92 is held in contact with the stopper 88. This state is obviously that in which the key switch is off.

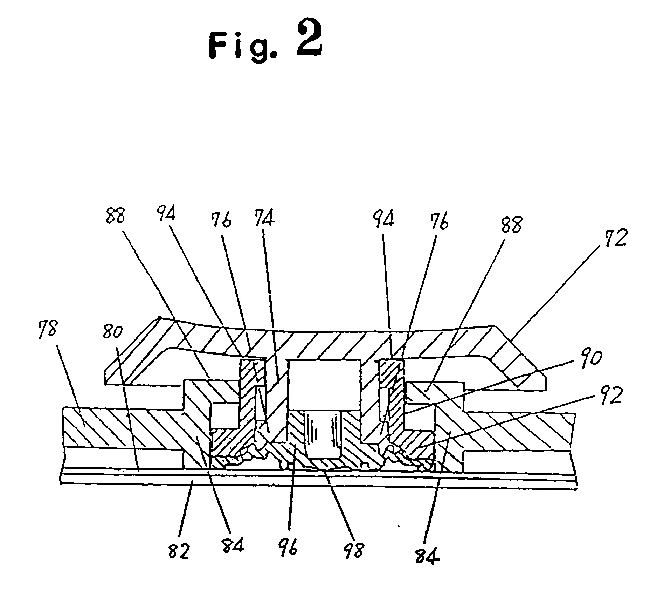

The rubber spring 96 begins to be deformed as the keytop 72 is pushed down against the lifting force of the rubber spring 96 from the state shown in Figure 1. When the underside of the keytop 72 comes in contact with the upper end of the intermedeate guide cylinder 90, the keytop 72 begins to push the intermediate guide cylinder 90 as well as the rubber spring 96, on which the intermediate guide cylinder 90 begins to move downward, guided by the guide cylinder 84. The bottom of the intermediate guide cylinder 90 also presses down on the side of the rubber spring 96 at this time. The rubber spring 96 suddenly collapses at the point at which the keytop 72 has come down the same keystroke distance as for a conventional key switch, upon which the activator node 98 presses down on the laminar switch 80 and turns it on, as shown in Figure 2. When the force pushing against the keytop 72 is removed, the restoring force of the rubber spring 96 pushes up the neck 74 so that the locking ledge 76 pulls up the intermediate guide cylinder 90, causing the laminar switch 80 to be turned off and restoring the key switch to the state of Figure 1. Preferably, the total of the distance of relative motion between the fixed guide cylinder 84 and the intermediate guide cylinder 90 and that between the intermediate guide cylinder 90 and the keytop 72 is greater than the aforementioned prescribed keystroke distance for the keytop 72.

As explained in detail above, in the present invention the guide cylinder, intermediate guide cylinder and neck of the keytop form a spigot joint type structure and behave in the manner at a telescoping fishing rod at the time of extension and contraction in such a manner that there is no need for the use of a long keystem as a guiding part for the keytop as in conventional key switches. For this reason, the present invention exhibits merits such as the fact that the height of the key switch is greatly reduced as compared with that of conventional key switches, and that a clicking sensation the same as that for conventional key switches is nonetheless maintained, due to the fact that an elastic body in the form of a rubber spring of the same height as that of conventional key switches can be used.

## Claims

1. A key switch comprising a base plate (78) including an electric contact mechanism (80); a fixed guide cylinder (84) on the base plate; a keytop (72) having a neck (74) which is slidable relatively to the guide cylinder; an elastic body (96) pushing up the keytop to the upper limit from the base plate, and arranged to activate the electric contact mechanism by being suddenly collapsed by pressure of the keytop after a prescribed keystroke distance, and pushing up the keytop to deactivate the electric contact mechanism on removal of the pressure; characterised by an intermediate guide cylinder (90), which is free to slide lengthwise inside the fixed guide cylinder (84), and in which the neck (74) is slidable during an initial part of the keystroke, whereafter, during the remainder of the keystroke, the intermediate guide cylinder is carried along with the keytop and both the keytop neck (74) and intermediate guide cylinder (90) engage the elastic body to cause collapse thereof.

2. A key switch according to claim 1, wherein the elastic body (96) is a cup-shaped rubber spring.

3. A key switch according to claim 2, wherein an activator node (98) on the collapsed rubber spring pushes and activates the contact mechanism (80).

## Patentansprüche

1. Tastschalter mit einer Bodenplatte (78), die einen elektrischen Kontaktmechanismus (80) aufweist; einem feststehenden Führungszylinder (84) auf der Bodenplatte; einem Tastenoberteil (72) mit einem relativ zum Führungszylinder verschiebbaren Hals (74); einem das Tastenoberteil von der Bodenplatte bis zu einer oberen Grenze nach oben drückenden elastischen Körper (96), der so ausgebildet ist, daß er den elektrischen Kontaktmechanismus dadurch aktiviert, daß er plötzlich durch den Druck des Tastenoberteils nach einem vorbestimmten Tastenanschlagweg kollabiert, und den Tastenoberteil nach oben drückt, um den elektrischen Kontaktmechanismus bei Wegnahme des Drucks zu deaktivieren, gekennzeichnet durch einen intermediären Führungszylinder (90), der in Längsrichtung in dem feststehenden Führungszylinder (84) frei verschiebbar ist und in dem der Hals (74) während eines Anfangsteils des Tastenanschlags verschiebbar ist, wonach der intermediäre Führungszylinder während des Restes des Tastenanschlags von dem Tastenoberteil mitgenommen wird und der Hals (74) des Tastenoberteils und der intermediäre Führungszylinder (90) sich beide am elastischen Körper anlegen, um dessen Kollabierung zu bewirken.

2. Tastschalter nach Anspruch 1, bei dem der elastische Körper (96) eine haubenartig geformte Gummifeder ist.

3. Tastschalter nach Anspruch 2, bei dem ein Aktivierungsvorsprung (98) an der kollabierten Gummifeder auf den Kontaktmechanismus (80) drückt und ihn aktiviert.

## Revendications

1. Interrupteur actionné par touche de clavier comportant une plaque d'appui (78) comprenant un mécanisme de contact électrique (80); un cylindre-guide fixe (84) sur la plaque d'appui; un dessus de touche (72) comportant un col (74) qui peut coulisser relativement au cylindre-guide; un corps élastique (96) poussant vers le haut le dessus de touche jusqu'à la limite supérieure depuis la plaque d'appui, et agencé pour activer le mécanisme de contact électrique en étant brusquement affaissé par pression du dessus de touche après une distance de course de la touche prédéterminée, et poussant vers le haut le dessus de touche pour désactiver le mécanisme de contact électrique lorsque la pression est relâchée; caractérisé par un cylindre-guide intermédiaire (90), qui est libre de coulisser longitudinalement à l'intérieur du cylindre-guide fixe (84), et dans lequel le col (74) peut coulisser durant une partie initiale de la course de la touche, puis, durant le reste de la course de la touche, le cylindre-guide intermédiaire est entraîné avec le dessus de touche et le col (74) de dessus de touche et le cylindre-guide intermédiaire (90) engagent tous deux le corps élastique pour entraîner son affaissement.

2. Interrupteur actionné par touche selon la revendication 1, dans lequel le corps élastique (96) est un ressort de caoutchouc en forme de U.

3. Interrupteur actionné par touche selon la revendication 2, dans lequel un noeud d'activateur (98) sur le ressort de caoutchouc affaissé pousse et active le mécanisme de contact (80).
